# EUROPÄISCHE PATENTSCHRIFT

(11) **EP 0 876 263 B1**
(45) Veröffentlichungstag und Bekanntmachung des Hinweises auf die Patenterteilung: **29.12.1999**
(21) Anmeldenummer: 97902224.1
(22) Anmeldetag: 24.01.1997
(51) Int. Cl.: B60G 17/015, B60G 21/055, B60G 21/10, B62D 9/02, B62D 61/08, B62K 5/04

(54) **FAHRZEUG MIT EINEM RAHMEN UND WENIGSTENS ZWEI SCHWINGEN**
VEHICLE WITH A FRAME AND AT LEAST TWO LINK ARMS
VEHICULE COMPORTANT UN CADRE ET AU MOINS DEUX BIELLES OSCILLANTES

(30) Priorität: 25.01.1996 AT 13896
(43) Veröffentlichungstag der Anmeldung: 11.11.1998
(73) Patentinhaber: Geiser, Friedrich, 6714 Nüziders (AT)
(72) Erfinder: Geiser, Friedrich, 6714 Nüziders (AT)
(74) Vertreter: Kaminski, Susanne, Dr.
(86) Internationale Anmeldenummer: EP9700339
(87) Internationale Veröffentlichungsnummer: WO9727071

(56) Entgegenhaltungen:
- EP-A- 0 202 842
- DE-A- 3 226 361
- DE-A- 3 611 417
- DE-A- 4 035 128
- DE-C- 679 966
- DE-C- 893 758
- DE-C- 958 082
- FR-A- 837 939
- FR-A- 839 856
- FR-A- 2 522 590
- FR-A- 2 550 507
- FR-A- 2 616 405
- FR-A- 2 646 379
- FR-A- 2 680 348
- GB-A- 2 220 625
- GB-A- 2 285 778
- US-A- 2 887 322
- PATENT ABSTRACTS OF JAPAN vol. 016, no. 007 (M-1198), 9.Januar 1992 & JP 03 231018 A (MAZDA MOTOR CORP), 15.Oktober 1991,
- PATENT ABSTRACTS OF JAPAN vol. 010, no. 189 (M-494), 3.Juli 1986 & JP 61 033310 A (NHK SPRING CO LTD), 17.Februar 1986,
- PATENT ABSTRACTS OF JAPAN vol. 009, no. 282 (M-428), 9.November 1985 & JP 60 124514 A (NIHON HATSUJIYOU KK), 3.Juli 1985,
- PATENT ABSTRACTS OF JAPAN vol. 012, no. 081 (M-676), 15.März 1988 & JP 62 221909 A (MAZDA MOTOR CORP), 30.September 1987,

## Beschreibung

Die Erfindung bezieht sich auf ein Fahrzeug mit einem Rahmen und wenigstens zwei Schwingen, entsprechend dem Oberbegriff des Anspruches 1. Es kann sich bei diesem Fahrzeug somit um jedes beliebige Fahrzeug, wie beispielsweise einen Schlitten, einen Skibob, ein Wassersportfahrzeug, ein mit Muskelkraft betriebenes oder eine motorisiertes Fahrzeug o.dgl. handeln. Insbesondere sind dabei Fahrzeuge mit drei Abstützpunkten gegenüber einem Untergrund (Schnee, Wasseroberfläche oder Fahrbahn) in Betracht gezogen, wobei die Erfindung darauf nicht eingeschränkt ist. So können insbesondere auch vier- oder sechsrädrige Fahrzeuge erfindungsgemäss ausgerüstet werden.

Die Schwingen des Fahrzeuges sind so ausgebildet, dass eine Schräglage des Fahrzeuges bei vollem Kontakt seiner Abstützelemente gegenüber dem Untergrund möglich ist.

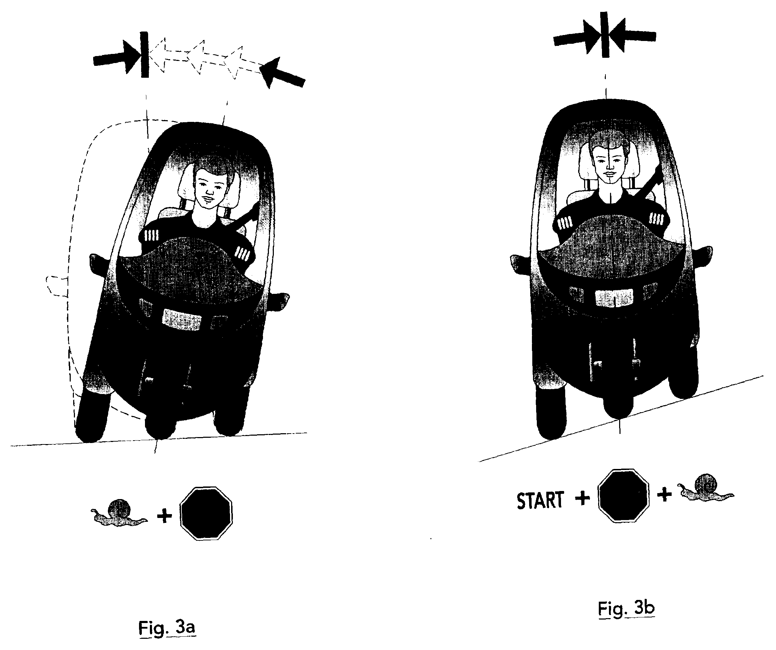

Ein Dreiradfahrzeug dieser Art ist beispielsweise aus der FR-A-2550507 bekannt. Aufgrund einer speziellen Fahrwerkstechnik sollte das dort beschriebene Fahrzeug die Fahreigenschaften und das Fahrverhalten eines einspurigen Fahrzeuges aufweisen. Das heisst, dass mit dem bekannten Fahrzeug Pendelbewegungen und Schräglegungen weitgehend widerstandsfrei durchführbar sein sollten. Das beschriebene Fahrzeug verfügt über einen hydraulischen Stabilisator, der am Mittelsteg einer T-förmig ausgebildeten Waage angreift. Diese ermöglicht ein Feststellen der Waage in einer beliebigen Position sowie ein aktives Zurückführen der Waage aus einer geneigten Stellung. Durch das aktive Zurückführen der Waage kann eine zu starke Schräglage korrigiert werden, wodurch die Gefahr von Unfällen durch seitliches Umkippen verringert werden soll. Der Aufbau gemäss der FR-A-2550507 ist einigermassen aufwendig und verfügt über eine Vielzahl von Stangen und Hebeln, die im Betrieb gesondert geschützt werden müssen, um eine Verletzungsgefahr zu reduzieren. Das Fahrzeug verfügt weiters über eine Federung, die aufgrund der gewählten Konstruktion nachteilig sein kann, da sie nicht die einzelnen Räder bzw. Schwingen stützt, sondern lediglich den Rahmen, gegenüber der Hebel- und Waagenkonstruktion. Ein individuelles Reagieren der beiden nebeneinander liegenden Räder in Abhängigkeit von Bodenunebenheiten o.dgl. ist durch diesen Aufbau somit nicht möglich. Da die Federkraft indirekt über zwei steife Koppelstangen auf beide Schwingen übertragen wird, kann es infolge der unsymmetrischen Ausbildung der Kräfte am Waagebalken zu ungleichmässigen Federkraftmomenten an den Schwingen kommen, die zu Störungen im Fahrbetrieb führen können(vgl. Fig. 3). Noch deutlicher wird die Problematik der unsymmetrischen Federkrafteinwirkung bei Fig. 3 von der FR-A-2616405, die einen einfacheren Aufbau, ohne Rückstelleinrichtung aufweist. Eine Arretierung einer gewählten Position ist gemäss dieser FR-A-2616405 gar nicht möglich.

Bei dem Fahrzeug gemäss FR-A-2550507 ist zudem aufgrund der Federung zwischen den Schwingen der Hinterradaufhängung und der Waage, die aus der Beeinflussung der Waage resultierende Positionsänderung der Schwingen nicht klar definiert.

Die FR-A-2550507 und FR-A-2616405 berücksichtigen auch nicht erfindungsgemässe sicherheitstechnische Überlegungen, nach denen jegliche direkte und zwangsweise Beeinflussung der Seitenneigung des Fahrzeuges, insbesondere auf den niedrigen Geschwindigkeitsbereich, also etwa unter 4 Kilometer pro Stunde, abgestellt sein sollte. Im Geschwindigkeitsbereich von grösser als dem niedrigen Geschwindigkeitsbereich (über ca. 4 km/h) sollte erfindungsgemäss nur eine tendenzielle Beeinflussung der Seitenneigung zulässig sein. Die in der FR-A-2550507 vorgesehene zwangsweise Einflussnahme auf die Schräglage des Fahrzeuges z.B. bei rascher Kurvenfahrt könnte den natürlichen Gleichgewichtszustand zwischen Zentrifugalkraft und Schwerkraft derart stören, dass das Fahrzeug ausser Kontrolle geraten könnte.

Erfindungsgemäss wird eine Entkopplung von der Federung der Abstützelemente (Räder) zum Untergrund angestrebt, ausserdem soll die Mechanik vereinfacht und der erforderliche Gesamtaufbau für den Zweck des Schräglegens des Fahrzeuges reduziert werden. Darüber hinaus soll die erlaubte Pendelbewegung der Schwingen begrenzbar sein und zwar unabhängig von der Federkennlinie der Federn, die die Schwingen gegebenenfalls elastisch stützen. Die Erfindung ist dabei jedoch nicht auf gefederte Fahrzeuge eingeschränkt.

Ein anderes Dreiradfahrzeug ist aus der DE-A-3226361 bekannt. Im Gegensatz zu dem aus der FR-A-2550507 bekannten Fahrzeug weist dieses Dreiradfahrzeug nur entfernt ähnliche Fahreigenschaften wie ein einspuriges Fahrzeug auf, da es sich um ein in sich verdrehbares, zweiteiliges Fahrzeug handelt. Der Fahrzeugvorderteil mit einem in der Mitte angeordneten, lenkbaren Vorderrad ist um eine horizontale Achse drehbar mit dem zweirädrigen Fahrzeughinterteil verbunden. Während sich der Fahrzeugvorderteil mit dem Fahrer bei Kurvenfahrt seitlich neigen lässt und somit ein ähnliches Fahrverhalten wie ein einspuriges Fahrzeug aufweist, bleibt der Fahrzeughinterteil ungeneigt und gleicht somit im Fahrverhalten einem mehrspurigen Fahrzeug. Diese seitliche Neigung, in der Beschreibung der DE-A-3226361 Rollbewegung genannt, kann durch eine mehrscheibige, mechanisch betätigbare Lamellenbremse in jeder beliebigen Stellung blockiert werden. Dies geschieht über eine geschwindigkeitsabhängige Steuerung, ohne Berücksichtigung der momentanen Stellung des Fahrzeuges, wodurch dieses in einer nicht vorhersehbaren Schräglage zum Stillstand kommen kann. Eine Vorrichtung zum Aufrichten des Fahrzeuges bei Stillstand ist nicht vorgesehen und bei grösseren Geschwindigkeiten besteht eine eingeschränkte Kurvenfahrtüchtigkeit.

Die US-A-2,887,322, welche als nächstliegendes Stand der Technik betrachtet wird, beschreibt ein zweispuriges Fahrzeug mit wenigstens drei Rädern und einem Laufwerk, durch das Fahreigenschaften erzielbar werden, die denen eines einspurigen Fahrzeugs, wie beispielsweise eines Fahrrads, vergleichbar sind. Dazu sind beispielsweise verschiebbare Elemente vorgesehen, die an einem die Last aufnehmenden und diese vergleichmässigenden Hebel federbelastet aufgehängt sind. Das das Fahrzeug ist dann im Gleichgewicht, wenn die Resultierende von Schwerkraft und Zentrifugalkraft auf den Boden an der Spurweitenmitte auftrifft.

Die eingangs genannte Aufgabe wird durch die Erfindung durch Kombination der Merkmale des Anspruches 1 gelöst. Aufgrund weitergehender Überlegungen, welche als Ziel ein vollständig geschlossenes Fahrzeug vorsehen, ist es ein weiteres Ziel der Erfindung, das Fahrzeug so auszubilden, dass der Einsatz der Beine des Fahrers in jeder Fahrsituation überflüssig ist. Weder das Fahrzeug gemäss DE-A-3226361, das zum Aufrichten des Vorderteils die Beinkraft des Fahrers benötigt, noch das Fahrzeug gemäss FR-A-2550507 dessen Rückstellkräfte auf die Waage nur unter bestimmten Bedingungen wirken, erfüllen dies Aufgabe.

Weitere Ausgestaltungen auch hinsichtlich der Lösung der weiteren Aufgaben sind in den abhängigen Ansprüchen beschrieben bzw. unter Schutz gestellt.

Aus diesen Aufbauten ergeben sich die unterschiedlichsten Vorteile und auch weitere Varianten der Erfindung, wie in der nachfolgenden Beschreibung, den Figuren und dazugehörenden Figurenbeschreibungen angegeben ist.

Spezielle weitere erfindungsgemässe Lösungen ergeben sich durch eine Einrichtung zur Erfassung der Geschwindigkeit, durch einen Neigungs- oder Gleichgewichtssensor (z.B. Pendel) sowie durch zusätzliche, proportional wirkende Steuerknöpfe links und rechts zur Betätigung durch einen Lenker. Diese Steuerungsknöpfe können entweder an einer Lenkstange oder aber auch beispielsweise im Bereich der Knie eines Fahrers vorgesehen sein.

Alle Befehle und Rückmeldungen werden bevorzugt in einer elektrischen bzw. elektronischen Steuereinheit verarbeitet und von dort an eine vorzugsweise elektrische Stelleinheit weitergeleitet.

Durch einen solchen besonderen Aufbau lassen sich willkürlich oder automatisch ferngesteuert bestimmte Stellungen der Schwingen erreichen und dies insbesondere in einem Geschwindigkeitsbereich von ungefähr unter 4 Stundenkilometern. Das ist der Bereich, in dem die Kreiselwirkung der Räder noch nicht ausreicht, eine Geradeausfahrt beizubehalten.

Die einfachste Möglichkeit zur erfindungsgemässen Verriegelung einer gewählten Relativposition der Schwingen zueinander ergibt sich bei einem erfindungsgemässen Fahrzeug aus einer formschlüssigen Sperreinrichtung, die wahlweise eingelegt werden kann oder nicht.

Entsprechend der besonderen erfindungsgemässen Ausgestaltung kann das Einlegen dieser Sperre selbsttätig bei Unterschreiten der Mindestgeschwindigkeit von z.B. 4 km/h während des Hin- und Herpendelns, wie dies beispielsweise vom Radfahren her bekannt ist, einrasten und derart das Fahrzeug in einer Position normal zum Untergrund stabilisieren. Bei den übrigen, durch die Erfindung umfassten Fahrzeugen wie Schlitten, Wasserfahrzeuge usw. können entsprechend den Bedürfnissen auch andere Mindestgeschwindigkeiten gewählt werden.

Eine etwas verbesserte Version eines erfindungsgemässen Fahrzeuges sieht eine Einrichtung vor, welche das Fahrzeug bei Erreichen bzw. Unterschreiten der Mindestgeschwindigkeit von 4 km/h aus einer ungewollten Schräglage aufrichtet und in einer Position normal zur Fahrbahn stabilisiert. Durch diese Einrichtung wird somit das Absetzen der Füsse des Fahrers (wie beim Motorrad) ersetzt, da in der Normallage das Fahrzeug durch die seitlichen Räder gegen Umkippen gestützt ist.

Eine weitere Verbesserung der Fahreigenschaften wird durch eine mehrscheibige Lamellenkupplung als Eingriffsmittel zwischen den beiden Enden der Achsen, die als Eingriffselemente dienen, der Schwingen erreicht. Durch Aktivieren (Schliessen) dieser Lamellenkupplung wird die gegenläufige Bewegung der Schwingen blockiert. Bei Unterschreiten der Mindestgeschwindigkeit wird die Lamellenkupplung in Normallage des Fahrzeuges automatisch aktiviert.

Bei einer weiteren Weiterbildung sorgt ein zusätzlicher Gleichgewichtssensor (Pendel) für die Messung allfälliger seitlicher Gefälle einer Fahrbahn, aufgrund deren das Fahrzeug in eine senkrechte Position gebracht werden kann. Die Lamellenkupplung kann ausserdem auch durch manuellen Befehl aktiviert werden, z.B. um Stürze zu vermeiden, wenn das Fahrzeug beispielsweise in einer Kurve die Bodenhaftung verliert und seitlich wegrutscht.

Es sind auch Kombinationen der drei genannten Möglichkeiten zur Stabilisierung bzw. Beeinflussung der Schräglage möglich. Jede Art der Beeinflussung der Schräglage des Fahrzeuges erfolgt grundsätzlich zwischen der linken und der rechten Schwinge (Aktion-Reaktion) oder in einer externen Einrichtung welche über ungefederte mechanische Verbindungselemente wie Stangen, Seilzüge, Ketten etc. mit den Schwingen verbunden ist. Die Beeinflussung bzw. Arretierung der Schräglage soll dabei erfindungsgemäss keinen Einfluss auf die Federung haben.

Um alle denkbaren Fahrsituationen beherrschen zu können, ohne dass der Fahrer dabei seine Beine benutzen muss, sind noch umfangreichere Einrichtungen als die eingangs beschriebenen bevorzugt.

Erfindungsgemäss ist hierfür eine zentrale Stelleinrichtung vorgesehen, welche über eine mehrscheibige, vorzugsweise hydraulisch betätigte Lamellenkupplung, eine mechanische Lastmomentsperre und einen Elektromotor mit Getriebe die von der Steuerung eingehenden Befehle umsetzt. Die beiden Hebelarme der Stelleinrichtung sind über zwei Schub-Zugstangen mit den beiden Schwingen verbunden. Bei Unterschreiten der Mindestgeschwindigkeit von 4 km/h wird automatisch von der manuellen Gleichgewichtssteuerung (Zweiradfahrt) auf automatische Gleichgewichtssteuerung umgeschaltet (Neigungs- oder Gleichgewichtssensor). Das Fahrzeug bleibt darauf auch bei seitlich geneigter Fahrbahn immer senkrecht, was vor allem bei Langsamfahrt wesentlich sein kann. Wird bei langsamer Fahrt (z.B.< 4 km/h) eine Kurve eingeleitet, so neigt sich das Fahrzeug automatisch entsprechend der Geschwindigkeit und dem Kurvenradius (Zentrifugalkraft beeinflusst Neigungs-Sensor). Bei rascher Kurvenfahrt oder zum Einleiten einer Kurve bei rascher Fahrt bzw. für rasche Ausweichmanöver kann der Fahrer bei einer weiteren Ausgestaltung über den linken oder rechten Steuerknopf am Lenker die Schräglage des Fahrzeuges insbesondere tendenziell (d.h. nicht zwangsweise) beeinflussen. Die Stärke der Beeinflussung ist, gemäss einer Weiterbildung, proportional zum Druck auf den jeweiligen Steuerknopf, wird jedoch nach oben durch das Signal des Neigungs-Sensors begrenzt.

Um Stürze zu vermeiden, wenn das Fahrzeug in einer Kurve die Bodenhaftung verliert, kann der Fahrer durch gleichzeitiges Drücken beider Steuerknöpfe die gegenläufige Bewegung der Schwingen blockieren. (Gleichzeitiges Drücken mit beiden Händen entspricht einer Schreck-Reaktion) Sobald der Fahrer die Knöpfe loslässt ist die Blockierung aufgehoben. Wird das Fahrzeug abgestellt, so bewirkt ein einfacher formschlüssiger Arretierungsmechanismus innerhalb der Stelleinrichtung eine Fixierung des Fahrzeuges insbesondere in einer senkrechten Lage. Antriebe für die Fortbewegung des Fahrzeuges sind nicht dargestellt, da sie verschiedene, an sich bekannte Ausbildungen und Anordnungen aufweisen können. Im Falle eines Elektromobiles wäre ein Radnabenmotor bevorzugt.

Erfindungsgemäss ist es von Vorteil, wenn die Schwingen bei Geradeausfahrt auf einer ebenen Fahrbahn annähernd parallel zur Fahrbahn erstreckt sind, so dass die Auslenkung der Schwingen bei Schrägstellung des Fahrzeuges etwa symmetrisch zu dieser Parallellage erfolgt.

Eine erfindungsgemässe Vorrichtung kann mit Vorteil auch in der Landwirtschaft eingesetzt werden, z.B. beim Mähen auf Steilhängen, wo die Bodenhaftung verbessert und die Kippgefahr reduziert werden kann.

Weitere zum Teil auch unabhängig einsetzbare und erfinderische Merkmale der vorliegenden Erfindung werden aus der nachfolgenden Beschreibung und den beiliegenden Zeichnungen beispielhaft erläutert:

Es zeigen:
- Fig. 1: Ansichten und Beispiele praktischer Verwendung eines erfindungsgemässen Fahrzeuges;
- Fig. 2a: eine Frontansicht eines erfindungsgemässen Fahrzeuges bei rascher Kurvenfahrt mit durch den Fahrer mittels Lenken herbeigeführter Schräglage;
- Fig. 2b: Die Frontansicht des Fahrzeuges bei langsamer Fahrt bzw. Stillstand in aufrechter Position (normal zur Fahrbahn) mit zueinander fixierten Schwingen;
- Fig. 3a: Die Frontansicht des Fahrzeuges bei langsamer Fahrt in einer Kurve;
- Fig. 3b: Stillstand auf einer seitlich geneigten Fahrbahn (z.B. ca. 15%-25%);
- Fig. 4a: Die Frontansicht des Fahrzeuges bei rascher Kurvenfahrt wenn die Bodenhaftung verlorengeht (Blockierung der Pendelbewegung durch Betätigung beider Tasten);
- Fig. 4b: Die Frontansicht des Fahrzeuges mit Hinweis auf die Möglichkeit der tendenziellen Beeinflussung der Schräglage bei rascher Fahrt, z.B. Einleiten einer Kurve durch einseitige Tastenbetätigung;
- Fig. 5a: Seitenansicht, teilweise geschnitten;
- Fig. 5b: Rückenansicht;
- Fig. 5c: Aufsicht eines erfindungsgemässen Fahrzeuges mit ungefederten Schwingen (alternativ mit torsionsstabgefederten Schwingen) und Waage als Pendel-Element und angedeuteten Eingriffselementen;
- Fig. 6a: Seitenansicht, teilweise geschnitten;
- Fig. 6b: Rückenansicht;
- Fig. 6c: Aufsicht desselben Fahrzeuges mit gefederten Schwingen und Waage als Pendel-Element;
- Fig. 7a: Seitenansicht, teilweise geschnitten;
- Fig. 7b: Rückenansicht;
- Fig. 7c: Aufsicht des Fahrzeuges mit ungefederter Hinterachse(alternativ mit Torsionsstabfeder zwischen Schwinge und Eingriffselement) und umlaufendem Seilzug als Eingriffsmittel;
- Fig. 8a: Seitenansicht, teilweise geschnitten;
- Fig. 8b: Rückenansicht;
- Fig. 8c: Aufsicht eines anderen Fahrzeuges mit gefederten Schwingen und umlaufendem Seilzug als Eingriffsmittel;
- Fig. 9a: Seitenansicht, teilweise geschnitten;
- Fig. 9b: Rückenansicht;
- Fig. 9c: Aufsicht des Fahrzeuges mit ungefederten Schwingen und einem Kegelradgetriebe als Eingriffsmittel;
- Fig. 10a: Seitenansicht, teilweise geschnitten;
- Fig. 10b: Rückenansicht;
- Fig. 10c: Aufsicht einer Variante mit gefederter Hinterachse und Kegelradgetriebe als Eingriffsmittel;
- Fig. 11a: Seitenansicht, teilweise geschnitten;
- Fig. 11b: Rückenansicht;
- Fig. 11c: Aufsicht des Fahrzeuges mit ungefederter Hinterachse und
- Fig. 11d: einem hydraulischen Ausgleich als Pendel-Element(Hydraulik-Schema);
- Fig. 12a: Seitenansicht, teilweise geschnitten;
- Fig. 12b: Rückenansicht;
- Fig. 12c: Aufsicht des Fahrzeuges mit gefederter Hinterachse;
- Fig. 12d: hydraulischer Ausgleich als Pendel-Element sowie Gasdruckspeicher als Feder-Element (Hydraulik-Schema);
- Fig. 13a: Seitenansicht, Aufsicht und Schnitt entlang der Schnittebene A-A- einer Vorrichtung zur formschlüssigen Blockierung der beiden Schwingen zueinander (Stellung z.B. normal zur Fahrbahn)
- Fig. 13b: Seitenansicht, Aufsicht und Schnitt entlang der Schnittebene C-C einer Vorrichtung zum Aufrichten des Fahrzeuges und Blockieren der Schwingen in deren paralleler Lage, Fahrzeug steht normal zur Fahrbahn;
- Fig. 13c: Seitenansicht, Rückansicht und Schnitt entlang der Schnittebene D-D einer mehrscheibigen, mechanisch betätigten Lamellenkupplung zur Blockierung der gegenläufigen Bewegung der Schwingen in jeder beliebigen Stellung;
- Fig. 14a: Seitenansicht, teilweise geschnitten;
- Fig. 14b: Rückansicht;
- Fig. 14c: Aufsicht eines erfindungsgemässen Fahrzeuges mit einer ungefederten Hinterachse und einer Waage als Pendel-Element, einer zentralen Stelleinheit, elektrische Steuerung, einer Einrichtung zur Erfassung der Geschwindigkeit, einen Gleichgewichts-Sensor (freihängendes Pendel) sowie Steuerknöpfen zu beiden Seiten des Lenkers;
- Fig. 15a: Seitenansicht, teilweise geschnitten entlang der Schnittebene B-B;
- Fig. 15b: Aufsicht;
- Fig. 15c: Schnitt entlang der Schnittebene A-A einer zentralen Stelleinheit mit Stell-E-Motor, Getriebe, Lastmoment-Sperre, sowie einer hydraulisch betätigten Lamellenkupplung.

### Erläuterungen:

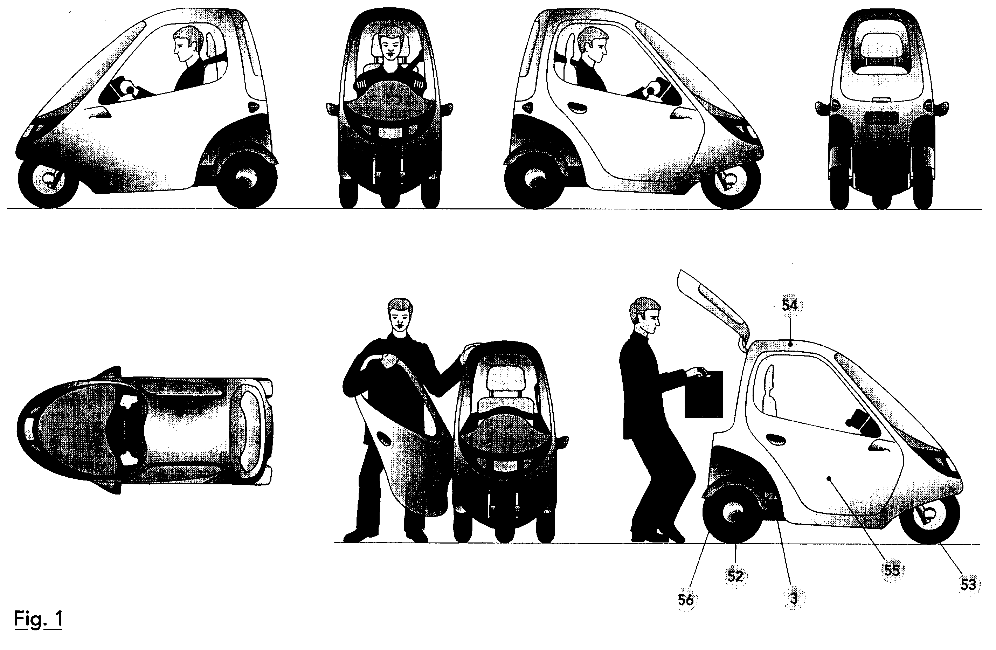

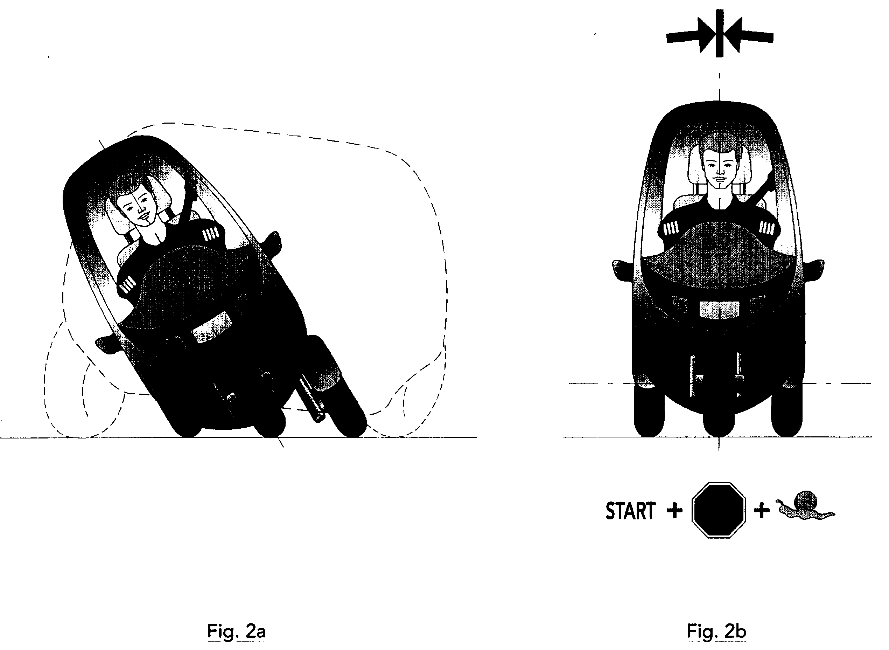

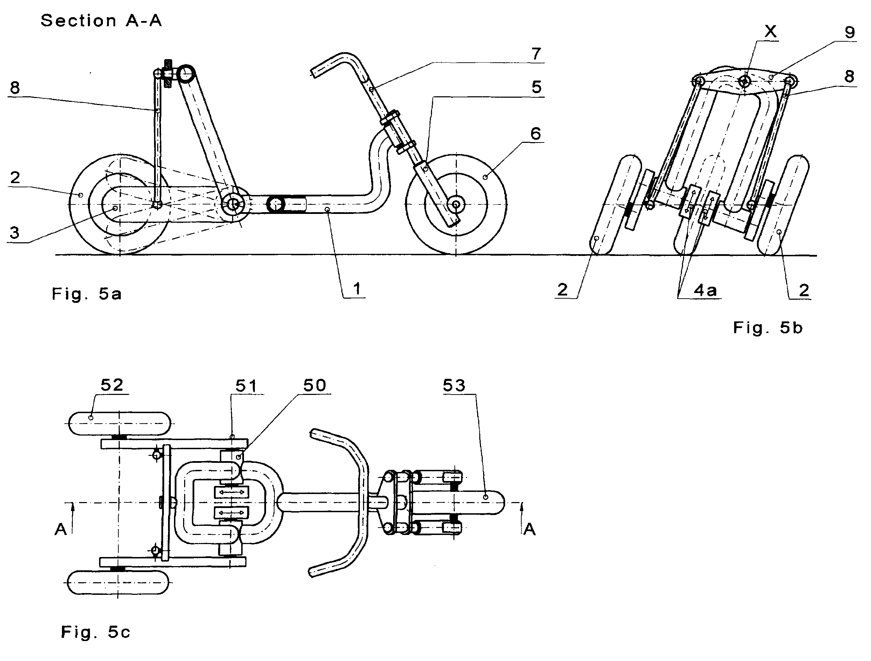

Fig. 1 zeigt eine mögliche Ausführungsvariante eines erfindungsgemässen Fahrzeuges zur Entlastung des Stadtverkehres. In Fig.2a-Fig.4b sollen die verschiedenen Betriebszustände eines solchen Fahrzeuges veranschaulicht werden. In Fig.5-Fig.12 werden verschiedene Ausführungsvarianten eines Dreirades, welches die Fahreigenschaften eines Zweirades aufweist, dargestellt und im folgenden noch eingehend beschrieben.

Alle Ausführungsvarianten haben eines gemeinsam: Sie erlauben im Normalbetrieb nahezu widerstandsfreie Pendelbewegungen sowie eine Schräglegung des Fahrzeuges, wobei sich dieses so verhält, als würde es auf einem fiktiven mittleren Hinterrad fahren.

Nicht näher dargestellt sind zunächst irgendwelche zusätzlichen Einrichtungen zur Beeinflussung der Schräglage oder zur Querstabilisierung des Fahrzeuges.

Ebenfalls ähnlich ist in Fig. 5-12 dargestellten Fahrzeugen der Grundaufbau, der z.B. aus ausgeschäumten Alurohren bestehen kann.

In einem Fahrzeugrahmen 1 sind drehbar zwei voneinander unabhängige Schwingen 3 gelagert. Die Schwingen 3 tragen an ihrer Aussenseite jeweils ein Rad 2. An den der Fahrzeugmitte zugewandten Enden der Drehachsen der Schwingen 3 sind Eingriffselemente 4a angedeutet, welche fest mit der Drehachse der Schwingen 3 verbunden sind und sich deshalb bei Pendelbewegungen in entgegengesetzter Richtung zueinander verdrehen. Am vorderen Ende des Fahrzeugrahmens 1 ist die Vorderrad-Gabel 5 mit dem Vorderrad 6 und dem Lenker 7 angelenkt.

Fig. 5 zeigt ein Beispiel einer Minimalausführung des Fahrzeuges. Die beiden Schwingen 3 sind über Schubstangen 8 mit einer Waage 9 verbunden, welche im Drehpunkt X drehbar mit dem Fahrzeugrahmen 1 verbunden ist und die gegenläufige Bewegung der Schwingen bewirkt. Gemäss einer nicht näher dargestellten Variante könnte die Waage in ihrem Drehpunkt arretierbar sein. In der Regel wird eine solche erfindungsgemässe Arretierung jedoch zwischen den Eingriffselementen 4a durchgeführt.

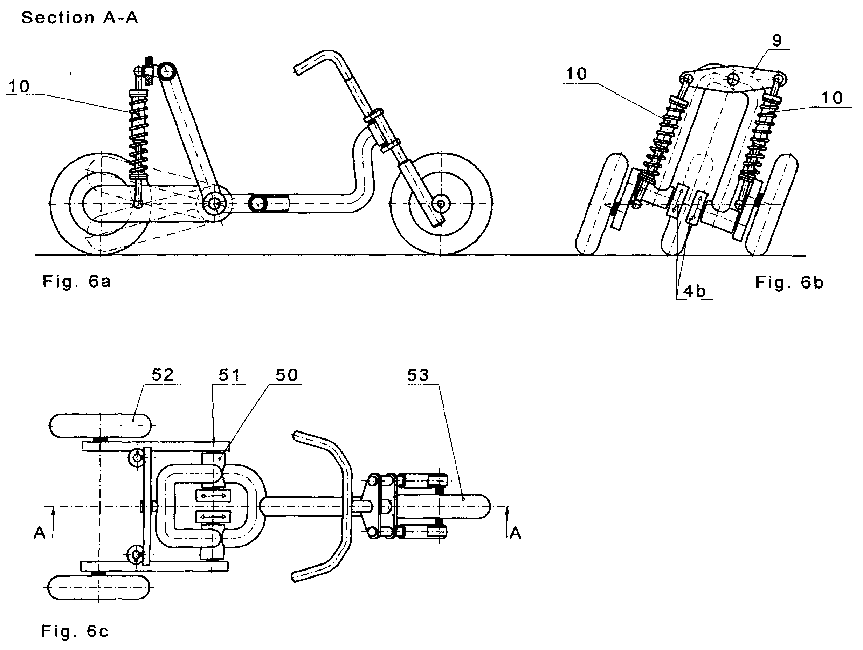

Fig. 6 zeigt eine nahezu identische Ausführung wie Fig. 5, jedoch sind hier die Schwingen 3 über gedämpfte Federbeine 10 mit der Waage 9 verbunden. Die Federbeine 10 haben derart keinen Einfluss auf die Pendelbewegung. Trotzdem wird jede Schwinge bzw. das mit ihr verbundene Rad optimal gefedert.

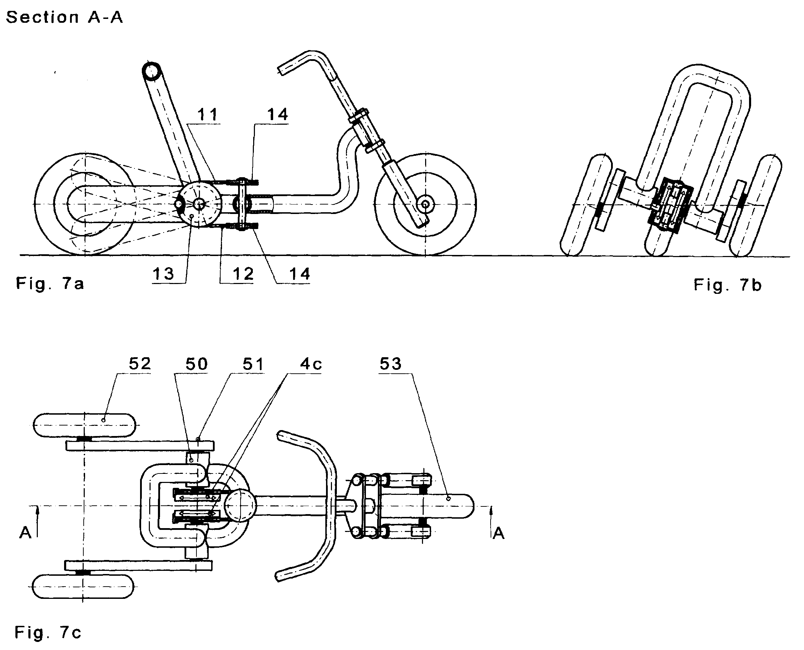

In Fig.7 ist eine Ausführung dargestellt, bei welcher die gegenläufige Bewegung der Schwingen 3 bzw. deren Eingriff durch zwei umlaufende Seilzüge 11 u. 12 bewirkt wird. Die beiden Enden sowohl des oberen Seiles 11 als auch des unteren Seiles 12 sind fest mit den Seilrollen 13 verbunden. Beide Seile 11 u. 12 werden über drehbar am Fahrzeugrahmen gelagerte Umlenkrollen 14 umgelenkt. Seilzüge im Sinne der Erfindung umfassen auch Ketten, Keilriemen, Zahnriemen o.dgl. Diese Ausführung ist ungefedert. Eine Federung wäre denkbar zwischen den Rädern und den Schwingen. Es wäre auch denkbar, diese oder die anderen ungefederten Varianten lediglich mit Stossdämpfern zu versehen.

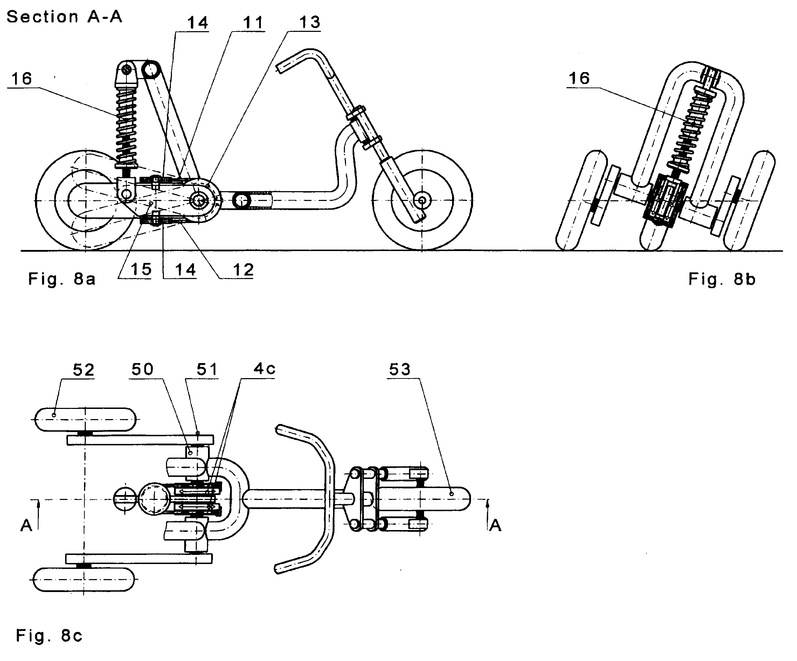

Die in Fig. 8 dargestellte Ausführungsvariante ist nahezu identisch mit der in Fig.7. Die gegenläufige Bewegung der Schwingen 3 wird durch zwei umlaufende Seilzüge 11 und 12 bewirkt. Sowohl die beiden Enden des oberen Seiles 11 als auch die beiden Enden des unteren Seiles 12 sind schlupffrei mit den Seilrollen 13 verbunden. Beide Seile 11 und 12 werden über die beiden drehbar auf der Federschwinge 15 gelagerten Umlenkrollen 14 umgelenkt. Anstelle der Seile kommen auch, wie erwähnt, Ketten, Zahnriemen o.dgl. in Frage. Die Rollen 13 oder 14 sind vorzugsweise z.B. über eine Bremse arretierbar, wie nicht näher dargestellt, um die Arretierung der Schwingen zu ermöglichen.

Das hintere Ende der Federschwinge 15 ist an einem gedämpften Federbein 16 angelenkt, welches an seinem oberen Ende beweglich mit dem Fahrzeugrahmen 1 verbunden ist. Die Federung hat derart keinen Einfluss auf die Pendelbewegung. Es wird somit auch vorteilhafterweise der grösste Teil der Masse des Rahmens gefedert - im Unterschied zu den erwähnten FR-An.

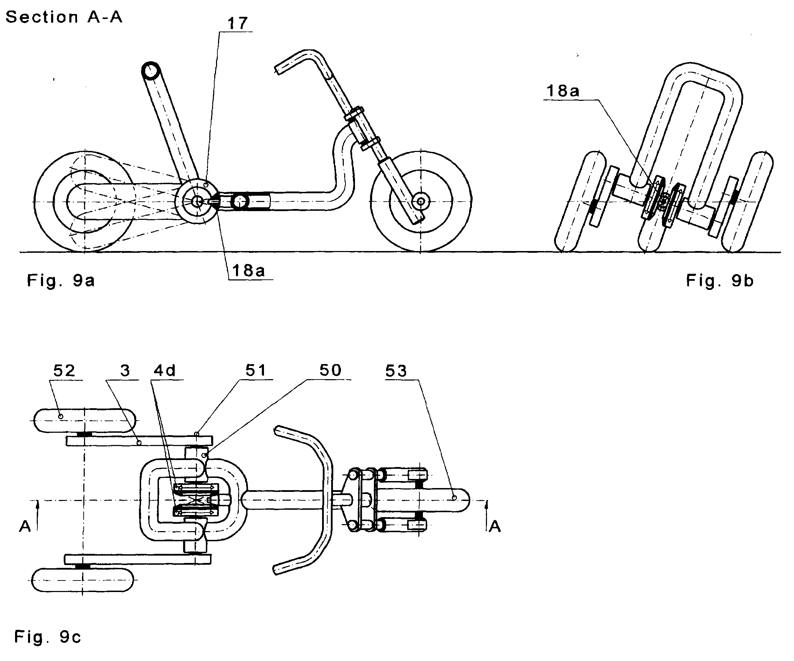

Fig. 9 zeigt eine ungefederte Ausführung, bei welcher die gegenläufige Bewegung der Schwingen 3 durch ein Kegelradgetriebe bewirkt wird. Die beiden, mit den Enden der Drehachsen der Schwingen 3 festverbundenen Kegelräder 17 stehen mit einem am Fahrzeugrahmen 1 drehbar gelagerten, mittleren Kegelrad 18 im Eingriff, das vorzugsweise, analog den Rollen gem. Fig. 7 od. 8 arretierbar ist.

Denkbar ist, hier oder bei den anderen ungefederten Varianten, die Welle zwischen Schwinge 3 und Eingriffselement 4 als Torsionsstab auszubilden, um derart eine individuelle Federung der Schwingen 3 zu erreichen.

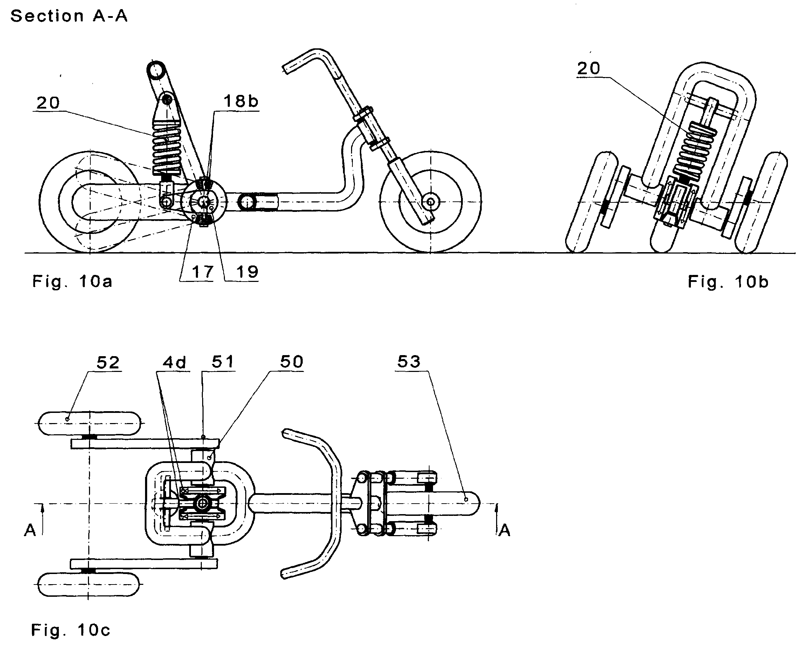

Eine nahezu Identische Ausführung wird in Fig. 10 dargestellt. Die beiden Kegelräder 17 stehen in ständigem Eingriff mit den beiden mittleren Kegelrädern 18, welche auf einer Federschwinge 19 drehbar gelagert sind. Die Federschwinge 19 ist im Mittelpunkt der Achse der Schwingen 3 drehbar gelagert und mit ihrem hinteren Ende an einem gedämpften Federbein 20 angelenkt. Das gedämpfte Federbein 20 ist an seinem oberen Ende beweglich mit dem Fahrzeugrahmen 1 verbunden. Die Federung hat keinen Einfluss auf die Pendelbewegung. Die Kegelräder 17 sind bevorzugt, wie nicht näher dargestellt, brems- bzw. arretierbar und gegebenenfalls händisch oder motorisch antreibbar um eine gewünschte Neigung oder Normallage herbeizuführen. Alternativ ist es auch denkbar, das Kegelzahnrad als Arretierkupplung zu benutzen, indem es grundsätzlich nicht drehbar, aber axial gegen die Eingriffsteile verschiebbar ist. Mit einem solchen Fahrzeug könnte man z.B. arretieren für Geschwindigkeiten unter 4 km/h und die Schwingen 3 freigeben für grössere Geschwindigkeiten.

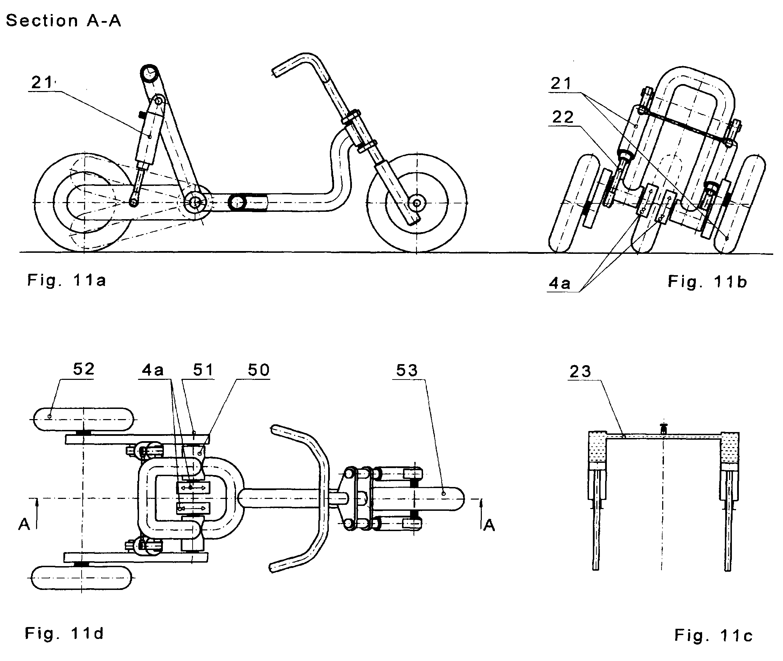

In Fig. 11 ist die ungefederte Ausführung eines hydraulischen Ausgleiches dargestellt, welcher die Schwingen 3 gegenläufig koppelt. Zwei einfachwirkende Hydraulik-Zylinder 21 sind an ihrem oberen Ende beweglich mit dem Fahrzeugrahmen 1 verbunden. Die Kolbenstangen 22 sind an ihrem unteren Ende jeweils an einer der Schwingen 3 angelenkt. Durch eine Verbindungsleitung 23 kann die über den Kolben befindliche Hydraulik-Flüssigkeit zwischen den beiden Hydraulik-Zylindern 21 hin- und herströmen. Würde dort ein Sperrventil vorgesehen, könnten die Schwingen 3 derart arretiert werden.

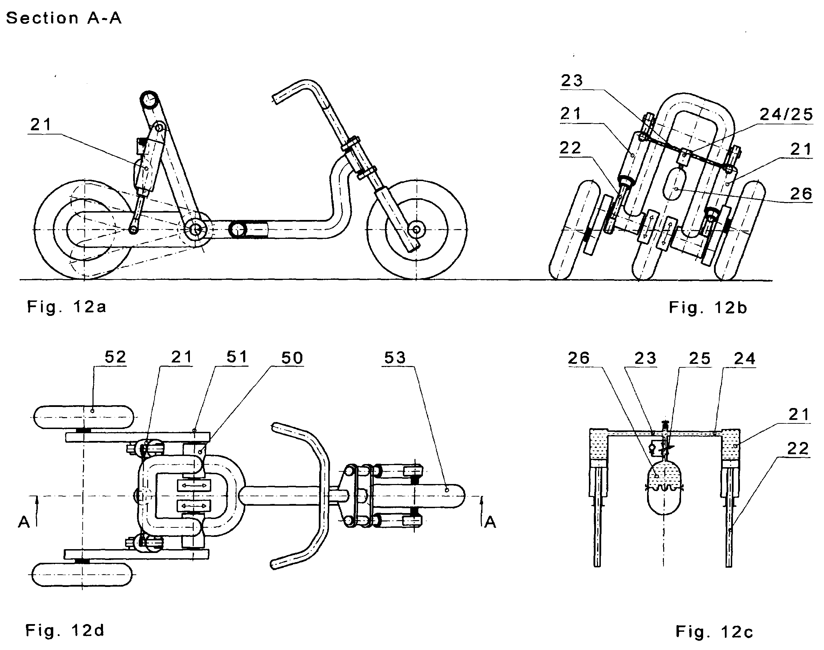

Fig. 12 schliesslich zeigt dieselbe Ausführung wie Fig. 11, jedoch ist hier in der Mitte der Verbindungsleitung 23 ein T-Stück 24 eingesetzt über welches die Hydraulikflüssigkeit in einen Gasdruckspeicher ein- und ausgepresst werden kann, wodurch ein gleichzeitiges Ein- und Ausfedern der beiden Kolbenstangen 22 ermöglicht wird. Um einen Dämpfungseffekt zu erzielen ist zwischen dem T-Stück 24 und dem Gasdruckspeicher 26 ein Drosselrückschlagventil 25 angeordnet, über welches die Hydraulikflüssigkeit nahezu widerstandsfrei in den Gasdruckspeicher 26 gelangt, beim Zurückfliessen jedoch durch eine Drossel gebremst wird. Geeignete zusätzliche Sperrventile könnten wie bei Fig. 11 erwähnt, zu Sperrzwecken verwendet werden. Die Eingriffselemente 4 könnten dadurch entfallen, so dass dies eine unabhängige Entwicklung darstellte. Auch bei dieser Ausführung hat die Federung keinen Einfluss auf die Pendelbewegung.

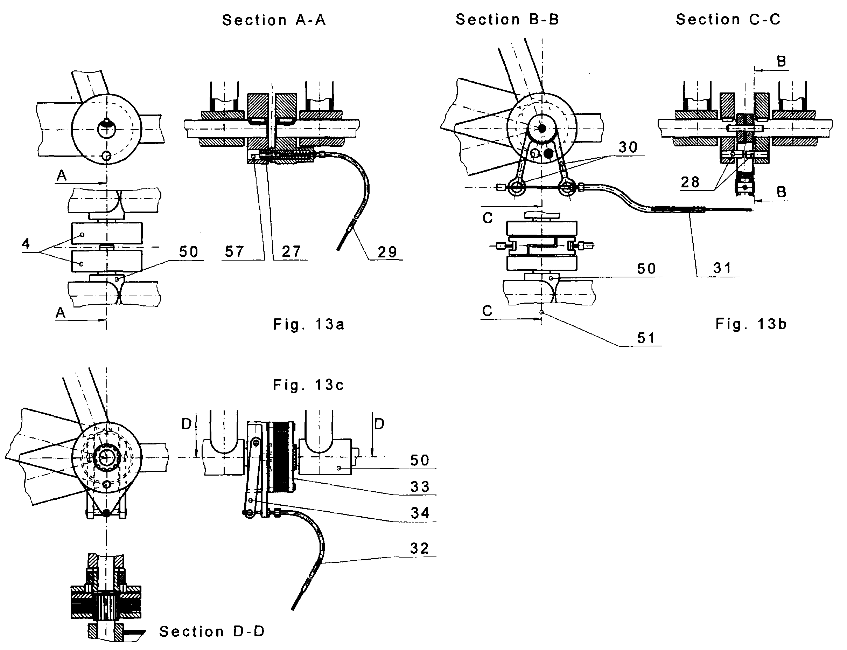

In Fig. 13a, 13b und 13c sind verschiedene Einrichtungen zur Blockierung bzw. Beeinflussung der Pendelbewegung dargestellt.

Fig. 13a zeigt eine der einfachsten Arten einer Blockierung der Pendelbewegung in einer bestimmten Stellung. Ein über einen Bowden-Zug 29 betätigter Sperrbolzen 27 welcher in einer möglichst weit vom Drehpunkt entfernten Bohrung in einem der Eingriffselemente 4 verschiebbar gelagert ist, wird durch eine Feder in eine Bohrung des gegenüberliegenden Eingriffselemente 4 geschoben, wodurch die gegenläufige Bewegung der Eingriffselemente 4 und somit der Schwingen 3 blockiert ist. Die Federung wird durch diese Blockierung nicht beeinträchtigt.

Fig. 13b stellt eine etwas erweiterte Einrichtung zur Beeinflussung der Pendelbewegung dar, welche in der Lage ist, das Fahrzeug zwangsweise aufzurichten. In die beiden gegenüberliegenden Flächen der Eingriffselemente 4 ist je ein Bolzen 28 eingelassen. Die Bolzen 28 sind so positioniert, dass sie auf einer Achse liegen, wenn die Schwingen 3 parallel stehen. Mittels einer zangenartigen Vorrichtung 30, welche über einen Bowden-Zug 31 zusammengezogen wird, können die beiden Bolzen 28 zwangsweise in eine achsgleiche Lage gedrückt und somit das Fahrzeug normal zur Fahrbahn aufgerichtet werden. Eine nicht gezeigte Variante dazu umfasst Langlöcher in den Schenkein der Zange 30, die die Bolzen aufnehmen, so dass auch gegenläufige Zwangsverstellungen vorgenommen werden können.

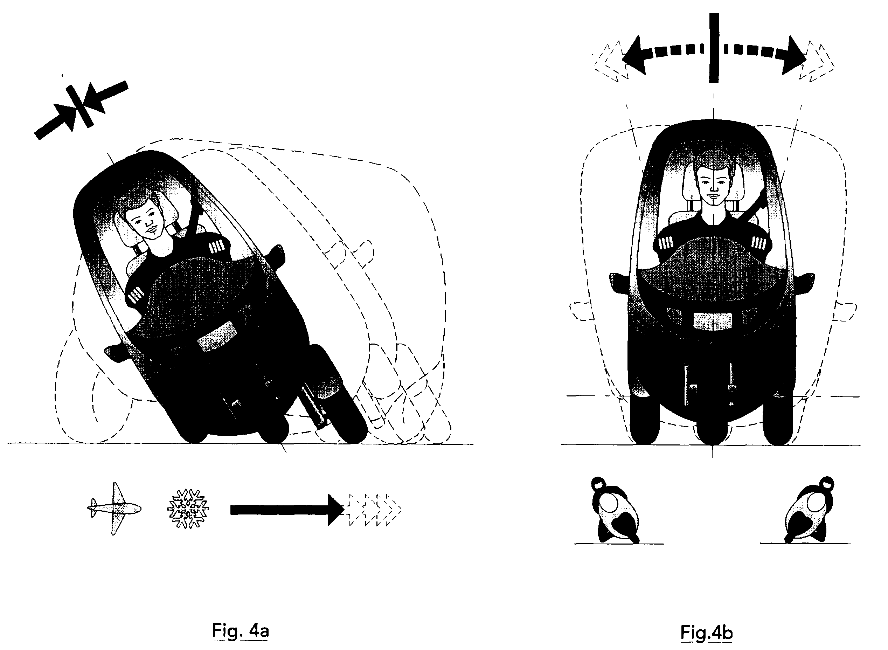

Fig. 13c zeigt eine mechanisch über einen Bowden-Zug betätigte, mehrscheibige Lamellenkupplung 33. Die einzelnen Lamellen sind wechselweise mit einem der Eingriffselemente 4 drehsteif verbunden. Wird die Lamellenkupplung 33 über den Bowden-Zug 32 und den Hebel 34 aktiviert (angepresst) so kann damit die Pendelbewegung in jeder beliebigen Stellung blokkiert werden. Vorteilhaft ist dies in Fahrsituationen wie in Fig. 4a dargestellt oder bei langsamer Fahrt oder Stillstand auf seitlich geneigten Flächen - Fig. 3b. Für die automatische Ansteuerung dieser Einrichtung ist ein Sensor vorgesehen, welcher die senkrechte Stellung erkennen kann (Neigungssensor).

Die Federung wird vorteilhafterweise durch beide oben genannten Einrichtungen nicht beeinträchtigt.

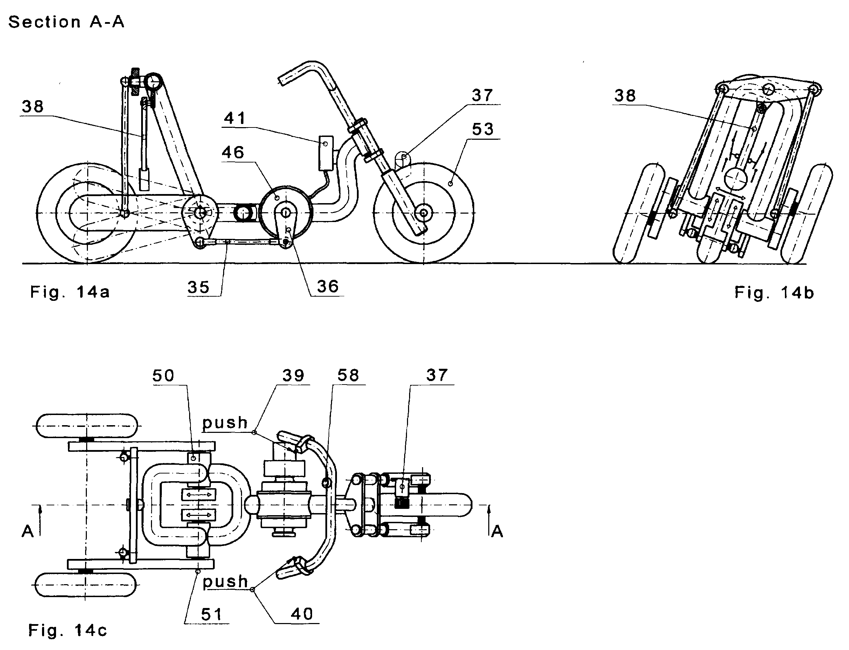

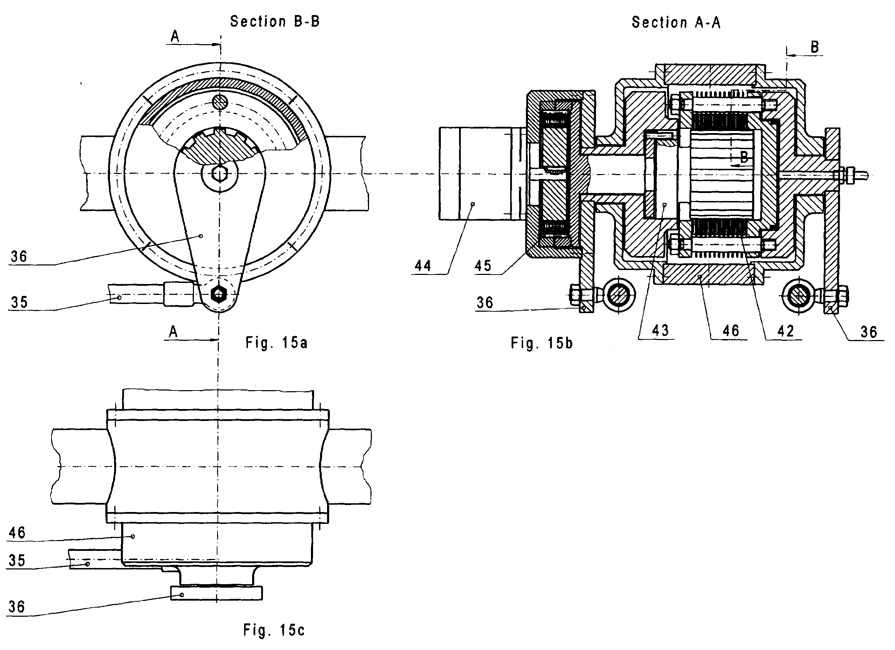

Fig. 14: Das Grundfahrzeug ist identisch mit dem unter Fig. 5 beschriebenen Fahrzeug. Die beiden Eingriffselemente 4 sind als Hebel ausgebildet und über zwei Verbindungsstangen 35 mit den Hebeln 36 der zentralen Stelleinheit - Fig. 15 verbunden. Die Signale der Einrichtung zur Erfassung der Geschwindigkeit 37 des Neigungs- oder Gleichgewichtssensors 38, sowie der beiden Proportional-Steuerknöpfe 39 und 40 werden in der Steuereinheit 41 verarbeitet bzw. verstärkt und als elektrisches oder hydraulisches Signal an die zentrale Stelleinrichtung Fig. 15 weitergegeben, welche in oben beschriebener Weise auf die Schwingen 3 wirkt, ohne die Federung zu beeinträchtigen.

Der Aufbau einer bevorzugten Variante der zur Beeinflussung der Seitenneigung und somit zum Fahren ohne Einsatz der Beine des Fahrers ausgerüsteten Einrichtungen in der zentralen Stelleinheit ist in Fig. 15 dargestellt. Eine mehrscheibige, hydraulisch betätigte Lamellenkupplung, deren Lamellen wechselweise mit einem der Hebel 36 oder mit der Antrieb-Seite der Lastmoment-Sperre 43 verbunden sind. Die Lastmoment-Sperre 43 stellt eine kraftschlüssige, nahezu spielfreie Drehverbindung zu dem anderen Hebel 36 dar. Die Lastmoment-Sperre 43 kann nur von der Antriebsseite her in beiden Drehrichtungen bewegt werden. Der Elektromotor 44 treibt über ein Getriebe 45 z.B. Harmonic(-Drive) die Antriebswelle der Lastmoment-Sperre 43 in der vorgegebenen Richtung an. Bei langsamer Fahrt < 4 km/h ist die Lamellenkupplung 42 voll im Eingriff und somit wirkt die zentrale Stelleinrichtung über die Hebel 36, die Verbindungsstangen 35 und die Hebel 34 zwangsweise auf die Schwingen 3 und sperrt die Seitenneigung des Fahrzeuges. Die Federung wird dadurch nicht beeinträchtigt. Wird bei rascher Fahrt z.B. über den Proportional-Steuerknopf 41 rechts ein Befehl gegeben, so beginnt der Elektromotor 44 in der entsprechenden Drehrichtung zu drehen und die Lamellenkupplung 42 schliesst proportional zu dem Druck auf den Proportional-Steuerknopf (Kupplung schleift nur leicht und schliesst dabei nicht vollständig). Diese tendenzielle Beeinflussung der Seitenneigung wird durch das Signal des Neigungs- oder Gleichgewichtssensors begrenzt.

Die Erfindung ist nicht auf ein dreirädriges Fahrzeug jener Bauart, die ein einzelnes Vorderrad und zwei unabhängige Hinterräder aufweist, beschränkt. Als Varianten, auf die in der Beschreibung nicht im Detail eingegangen wird, sind Fahrzeuge mit einem einzelnen Hinterrad und zwei unabhängigen, lenkbaren Vorderrädern oder auch vierrädrige Fahrzeuge vorstellbar. Die Verwendung erfindungsgemässer Fahrzeuge umfasst auch die Landwirtschaft z.B. bei Mähgeräten in Steilhanglagen, die so eine verbesserte Bodenhaftung bekommen können.

Unter Eingriffsmittel können im weitesten auch verstanden werden: die hydrostatische Abstützung 21-23 gem. Fig. 11 und 21-26 gem. Fig. 12, die bei geeigneter Auslegung und - nicht dargestellten - Sperrventilen in der Leitung 23 und/oder Pumpen die gewünschten Arretier- bzw. Aufrichteffekte ergeben können. Diese auch unabhängig einsetzbare Einrichtung könnte z.B. die Anordnung gemäss den FR-A ersetzen.

### Bezugszeichenliste

- 1: Fahrzeugrahmen
- 2: Hinterrad
- 3: Schwinge
- 4: Eingriffsteil
- 5: Vorderrad-Gabel
- 6: Vorderrad
- 7: Lenker
- 8: Schubstange
- 9: Waage
- 10: gedämpftes Federbein
- 11: Seilzug - oberer
- 12: Seilzug - unterer
- 13: Seilrolle
- 14: Umlenkrolle
- 15: Federschwinge
- 16: gedämpftes Federbein
- 17: Kegelrad
- 18: mittleres Kegelrad
- 19: Federschwinge
- 20: gedämpftes Federbein
- 21: Hydraulik-Zylinder
- 22: Kolbenstange
- 23: Verbindungsleitung
- 24: T-Stück
- 25: Drosselrückschlagventil
- 26: Gasdruckspeicher
- 27: Sperrbolzen
- 28: Bolzen
- 29: Bowden-Zug
- 30: zangenartige Vorrichtung
- 31: Bowden-Zug
- 32: Bowden-Zug
- 33: Lamellenkupplung (neu)
- 34: Hebel
- 35: Verbindungsstange
- 36: Hebel
- 37: Einrichtung zur Erfassung der Geschwindigkeit
- 38: Neigungs- oder Gleichgewichtssensor
- 39: Proportional-Steuerknopf links
- 40: Proportional-Steuerknopf rechts
- 41: Steuereinheit
- 42: Lamellenkupplung (hydr.)
- 43: Lastmoment-Sperre
- 44: Elektromotor
- 45: Getriebe
- 46: Gehäuse
- 50: Halterung
- 51: Schwenkachsen
- 52: Abstützelemente
- 53: Rad
- 54: Fahrerkabine
- 55: Einstieg
- 56: Freistellungen
- 57: Rastöffnungen
- 58: Signalvorrichtung

## Patentansprüche

1. Fahrzeug mit einem Rahmen (1) und wenigstens zwei parallel wirkenden Schwingen(3), die einenends an je einer, mit dem Rahmen (1) verbundenen, Halterung (50) schwenkbar gelagert sind, wobei die Schwenkachsen (51) der Schwingen (3) wenigstens annähernd fluchten und wobei die Schwingen (3) anderenends Abstützelemente (52) für den Kontakt des Fahrzeuges mit dem Untergrund aufweisen, welche Schwingen (3) am halterungsseitigen Ende wenigstens je ein mechanisches Eingriffselement (4a-d) für den direkten oder indirekten Eingriff mit dem jeweils anderen Eingriffselement (4a-d) aufweisen, wobei - im eingegriffenen Zustand - die kraftschlüssige Verbindung von einer Schwinge zur anderen starr bzw. nichtelastisch ist, **dadurch gekennzeichnet, dass** Eingriffsmittel (11-14; 17, 18a; 17, 18b; 27, 29; 28, 30, 31; 32-34; 42-45) vorgesehen sind, diesen Eingriff wahlweise herbeizuführen oder zu lösen, und dass die Eingriffselemente (4) mit einem Stellantrieb (31;44) koppelbar sind, der sie und somit die Schwingen (3) willkürlich und - vorzugsweise ferngesteuert - in eine gewählte Relativposition zueinander stellen lässt, wobei der Stellantrieb (31;44) gegebenenfalls einen Elektromotor (44) oder eine über Bowdenzüge (31) betätigbare Spannzange (30) umfasst.

2. Fahrzeug nach Anspruch 1, bei dem die Abstützelemente als Räder (52) ausgebildet sind und ein wenigstens - insbesondere lenkbares - drittes Rad (53) an seiner von den Schwingen (3) abragenden Seite den Rahmen abstützt, und wobei wenigstens eines der Räder (52,53) durch einen Antrieb antreibbar ist, **dadurch gekennzeichnet, dass** der Rahmen (1) eine ihn umschliessende Fahrerkabine (54) aufweist, die Freistellungen (56) für die Schwingen (3) und die Räder (52,53) und wenigstens an einer Seite der Kabine (54) wenigstens einen Einstieg (55) für einen Fahrer aufweist.

3. Fahrzeug nach Anspruch 1 oder 2, **dadurch gekennzeichnet, dass** die Eingriffsmittel wahlweise oder additiv umfassen:
a) kompatible Rastelemente (27) und Rastöffnungen (57) - insbesondere Bolzen und Bohrungen;
b) Getriebe- (17,18) oder Klauenkupplungen;
c) Reibkupplungen (33;42) - insbesondere eine Lamellenkupplung;
d) insbesondere arretierbare - Seil-, Ketten- oder Riemenzüge (11-14);
e) insbesondere arretierbare - Hebel- bzw. Schub- und Druckelemente (8,9;28,30;35,36;);
wobei die Eingriffsmittel (11-14; 17, 18a; 17, 18b; 27, 29; 28, 30, 31; 32-34; 42-45) vorzugsweise fernbedienbar sind und wobei insbesondere für die Fernbedienung durch einen Fahrer betätigbare Schalter, Taster (39,40) o.dgl. zur Verfügung stehen.

4. Fahrzeug nach einem der vorhergehenden Ansprüche, **dadurch gekennzeichnet, dass** die Schwingen (3) gegenüber dem Rahmen (1) mittels wenigstens einem Federelement (26;20;16;10;) so gefedert sind, dass die zwischen jedem Abstützelement(52) und Rahmen (1) wirkende Federkraft unabhängig ist von der Stellung der Eingriffselemente.

5. Fahrzeug nach einem der vorhergehenden Ansprüche, **dadurch gekennzeichnet, dass** wahlweise oder additiv vorgesehen sind:
a) ein zentrales Federbein (16), das die Eingriffsmittel (11-14;17,18) gleichförmig gegen den Rahmen abstützt;
b) je Schwinge (3) ein gegenüber dem Rahmen (1) abgestütztes hydrostatisches Federelement (21-23;21-25), wobei diese Federelemente vorzugsweise hydraulisch miteinander verbunden sind und gegebenenfalls einen gemeinsamen hydrostatischen Druckspeicher (26) aufweisen;
c) je Schwinge (3) ein Federbein (10) das gegen einen gemeinsamen, am Rahmen (1) schwenkbar gelagerten, Waagebalken (9) abgestützt ist;
d) je wenigstens eine Feder zwischen Abstützelemente (52) und Schwinge (3);
e) je ein federnder Torsionsstab zwischen jeder Schwinge (3) und dem Rahmen (1) oder dem dieser zugeordneten Eingriffselement (4);
wobei jeder Schwinge und insbesondere jedem Federelement vorzugsweise wenigstens ein Dämpfelement (z.B.25) - insbesondere ein hydraulisch wirkender Stossdämpfer - zugeordnet ist.

6. Fahrzeug nach einem der vorhergehenden Ansprüche, **dadurch gekennzeichnet, dass** jede der beiden Schwingen (3) mit wenigstens einer Zug-/Druckstange (8) verbunden ist, die anderenends an einem Waagebalken (9) angreift, der am Rahmen (1) schwenkbar gelagert ist, wobei gegebenenfalls der Waagebalken (9) an seiner Lagerstelle relativ zum Rahmen (1) blockierbar ist.

7. Fahrzeug nach einem der vorhergehenden Ansprüche, **dadurch gekennzeichnet, dass** eine Verbindung zwischen Rahmen (1) und Schwinge (3) oder die Verbindung zwischen Schwinge (3) und Eingriffselement (4) als Torsionsfeder ausgebildet ist.

8. Fahrzeug nach einem der vorhergehenden Ansprüche, **dadurch gekennzeichnet, dass** die Eingriffsmittel (11-14; 17, 18a; 17, 18b; 27, 29; 28, 30, 31; 32-34; 42-45) und/oder der Stellantrieb (31,44) - vorzugsweise willkürlich und/oder automatisch - in Abhängigkeit von über Sensoren (37;38) erfassbare Fahrzustände des Fahrzeuges steuerbar sind, wobei als Fahrzustände insbesondere die Geschwindigkeit oder die Kurvenlage - vorzugsweise über Geschwindigkeits- (37), Neigungs-, bzw. Fliehkraftsensoren (38)- bestimmbar sind und wobei gegebenenfalls eine Signalvorrichtung (58) vorgesehen ist, die dem Fahrer die Fahrzustände und/oder die Stellung der Stellantriebe und/oder die Stellung der Eingriffsmittel signalisiert.

9. Fahrzeug nach einem der vorhergehenden Ansprüche, **dadurch gekennzeichnet, dass** der Stellantrieb (31;46) einen Elektromotor mit einem Getriebe, z.B. ein Zyclo- oder Harmonicgetriebe umfasst, das weiters eine Lastmomentsperre (45) umfasst, die abtriebsseitig auftretende Drehmomente in beiden Richtungen sperrt und somit eine Verbindung zwischen den beiden Eingriffselementen (4) herstellt, antriebsseitig aufgebrachte Drehmomente jedoch auf die Abtriebsseite bzw. die Eingriffselemente (4) überträgt.

10. Verfahren zum Betrieb eines Fahrzeuges nach einem der vorhergehenden Ansprüche, **dadurch gekennzeichnet, dass** in Abhängigkeit von der Fahrgeschwindigkeit die beiden parallel wirkenden Schwingen (3) zueinander verriegelt oder entriegelt werden, und/oder dass durch einen Fahrer oder Sensor (37,38) befehlsgesteuert die Schwingen (3) über deren Eingriffselemente (4) mittels Eingriffsmitteln (11-14; 17, 18a; 17, 18b; 27, 29; 28, 30, 31; 32-34; 42-45) und eines Stellantriebes (31,41) in eine bestimmte Position zueinander gebracht werden, wobei die Schwingen im eingegriffenen Zustand zueinander starr bzw. nichtelastisch gehalten sind.

## Claims

1. Vehicle with a chassis (1) and at least two parallel operating swivels (3), which at one end are each pivoted on a support (50) connected to the chassis (1), whereby the swivelling axes (51) of the swivels (3) are at least approximately in alignment and whereby the swivels (3) are provided at the other end with support elements (52) for contact of the vehicle with the underlying surface, which swivels (3) are each provided at the support-side end with at least one mechanical engaging part (4a-d) for direct or indirect engaging with the other respective engaging element (4a-d), whereby - in engaged state - the frictional connection from one swivel to the other is rigid or inelastic respectively, characterized in that engaging means (11-14; 17, 18a; 17, 18b; 27, 29; 28, 30, 31; 32-34; 42-45) are provided to optionally implement or release this engaging, and that the engaging parts (4) can be coupled with an adjusting drive (31; 44), which enables them and consequently the swivels (3) to be positioned in a chosen relative position to one another at will - preferably remote-controlled, whereby the adjusting drive (31; 44) as the case may be, comprises an electromotor (44) or gripping tongs (30) activated via Bowden control cables (31).

2. Vehicle according to claim 1 in which the support elements are in the form of wheels (52) and at least a - in particular steerable - third wheel (53) is provided on its side projecting away from the swivels (3) supporting the chassis (1), and whereby at least one of the wheels (52, 53) can be actuated by a drive, characterized in that the chassis (1) is provided with a driver's cabin (54) enclosing it, which has free spaces (56) for the swivels (3) and the wheels (52,53) and at least on one side of the cabin (54) at least one entry/exit (55) for a driver.

3. Vehicle according to claim 1 or 2, characterized in that the engaging means optionally or in addition comprise:
a) compatible locking elements (27) and locking openings (57) - particularly bolts and borings;
b) gears (17, 18) or jaw clutches;
c) friction clutches (33; 42) - particularly a multiple disk clutch;
d) particularly locking - cable, chain or belt pulleys (11-14);
e) particularly locking - lever and push-pull elements (8,9; 28,30; 35,36;);
whereby the engaging means (11-14; 17, 18a; 17, 18b; 27, 29; 28, 30, 31; 32-34; 42-45) are preferably remote-controllable and whereby in particular for the remote-control pushes (39, 40) or the like are provided which can be actuated by the driver.

4. Vehicle according to one of the afore-mentioned claims, characterized in that the swivels (3) are spring-suspended with respect to the chassis (1) by means of at least one spring element (26, 20, 16, 10) so that the spring tension resulting between each support element (52) and the chassis (1) is independent of the position of the engaging elements.

5. Vehicle according to one of the afore-mentioned claims, characterized in that optionally or in addition the following are provided:
a) a central shock absorber leg (16), which supports the engaging means (11-14; 17, 18) uniformly on the frame;
b) for each swivel (3), a hydrostatic spring element (21-23; 21-25) supported on the chassis (1), whereby these spring elements are preferably hydraulically linked together and as the case may be are provided with a common hydrostatic pressure tank (26);
c) for each swivel (3) a shock absorber leg (10) which is supported on a common balance beam (9) pivoted on the chassis (1);
d) at least one spring between each support element (52) and swivel (3);
e) a spring torsion bar each between every swivel (3) and the chassis (1) or the engaging part (4) allotted hereto;
whereby each swivel and particularly each spring element is preferably provided with at least one damping element (e.g. 25) - in particular a hydraulic operating shock absorber.

6. Vehicle according to one of the afore-mentioned claims, characterized in that each of the two swivels (3) is connected with at least a pull-push rod (8), which engages at the other end with a balance beam (9), which is pivoted on the chassis (1), whereby as the case may be the balance beam (9) can be locked in its bearing relative to the chassis (1).

7. Vehicle according to one of the afore-mentioned claims, characterized in that a connection between the chassis (1) and the swivel (3), or the connection between the swivel (3) and engaging part (4) is in the form of a torsion spring.

8. Vehicle according to one of the afore-mentioned claims, characterized in that the engaging means (11-14; 17, 18a; 17, 18b; 27, 29; 28, 30, 31; 32-34; 42-45) and/or the adjusting drive (31, 44) - preferably at will and/or automatically - are controllable depending on the driving state of the vehicle determined via sensors (37; 38), whereby the driving state is determinable, particularly the speed or the tilting - preferably via the speed (37), tilting or centrifugal force sensors (38), and whereby as the case may be a signal device (58) is provided, which indicates to the driver the driving state and/or the position of the adjusting drive and/or the position of the engaging means.

9. Vehicle according to one of the afore-mentioned claims, characterized in that the adjusting drive (31; 46) comprises an electromotor with gears, e.g. cyclo or harmonic gears, furthermore a load block (45), which blocks torque occurring on the off-drive side in both directions and hence produces a connection between the two engaging parts (4), but, however, transmits torque occurring on the driving side to the off-drive side, i.e. the engaging part (4).

10. Method to operate a vehicle according to one of the afore-mentioned claims, characterized in that depending on the driving speed both parallel operating swivels (3) can be locked to one another or be released, and/or that command-controlled by a driver or sensor (37, 38) the swivels (3) can be brought to a certain position to one another via their engaging part through engaging means (11-14; 17, 18a; 17, 18b; 27, 29; 28, 30, 31; 32-34; 42-45) and an adjusting drive (31, 41), whereby in engaged state the swivels are held rigid and inelastic to one another.

## Revendications

1. Véhicule comportant un cadre (1) et au moins deux bielles oscillantes (3) agissant parallèlement, qui sont chacune montées à une extrémité, de façon susceptible de pivoter, sur une fixation (50) reliée au cadre (1), les axes de pivotement (51) des bielles oscillantes (3) étant au moins à peu près en alignement et les bielles oscillantes (3) présentant, à l'autre extrémité, des éléments d'appui (52) destinés au contact du véhicule avec le sol, ces bielles oscillantes (3) présentant, à l'extrémité située côté fixation, au moins chaque fois un élément d'engagement mécanique (4a-d) pour l'engagement direct ou indirect avec chaque fois l'autre élément d'engagement (4a-d), où - à l'état engagé - la liaison à interaction de forces d'une bielle oscillante à l'autre est rigide ou non élastique, caractérisé en ce que des moyens d'engagement (11-14 ; 17, 18a ; 17, 18b ; 27, 29 ; 28, 30, 31 ; 32-34 ; 42-45) sont prévus, pour au choix provoquer ou pour taire cesser cette mise en prise, et en ce que les éléments d'engagement (4) sont susceptibles d'être couplés à un servomoteur (31 ; 44) qui permet de les régler l'un par rapport à l'autre et, ainsi, les bielles oscillantes (3) à volonté et - de préférence par commande à distance - à une position relative sélectionnée, le servomoteur (31 ; 44) présentant, le cas échéant, un moteur électrique (44) ou une pince de serrage (30) actionnable par l'intermédiaire de câbles de Bowden (31).

2. Véhicule selon la revendication 1, dans lequel les éléments d'appui sont réalisés sous la forme de roues (52) et au moins une troisième roue (53) - en particulier à capacité directionnelle - soutenant le cadre sur son côté en porte-à-faux depuis les bielles oscillantes (3), et où au moins l'une des roues (52, 53) est susceptible d'être entraînée par un entraînement, caractérisé en ce que le cadre (1) présente une cabine de conducteur (54) qui l'entoure, qui présente des emplacements libres (56) pour les bielles oscillantes (3) et les roues (52, 53) et au moins, d'un côté de la cabine (54), au moins un accès (55) pour un conducteur.

3. Véhicule selon la revendication 1 ou 2, caractérisé en ce que les moyens d'engagement comprennent au choix ou de façon cumulative :
a) des éléments d'encliquetage (27) et des ouvertures d'encliquetage (57) compatibles - en particulier des boulons et des perçages ;
b) des embrayages de transmission (17, 18) ou à griffes ;
c) des embrayages à friction (33 ; 42) - en particulier un embrayage à lamelles ;
d) des tronçons de câble, de chaîne ou de courroie (11-14), en particulier pouvant être bloqués ;
e) des éléments formant levier, respectivement bielle et de pressage (8, 9 ; 28, 30 ; 35, 36 ;), en particulier pouvant être bloqués ;
les moyens d'engagement (11-14 ; 17, 18a ; 17, 18b ; 27, 29 ; 28, 30, 31 ; 32-34 ; 42-45) étant de préférence susceptibles d'être télécommandés et, en particulier pour la télécommande, étant prévus des interrupteurs, boutonpoussoirs (39, 40) actionnables par un conducteur.

4. Véhicule selon l'une des revendications précédentes, caractérisé en ce que les bielles oscillantes (3) sont suspendues élastiquement par rapport au cadre (1) à l'aide d'au moins un éléments élastique (26 ; 20 ; 16 ; 10 ;), en ce que la force élastique agissant entre chaque élément de soutien (52) et le cadre (1) dépend de la position des éléments d'engagement.

5. Véhicule selon l'une des revendications précédentes, caractérisé en ce que sont prévus, au choix ou de façon cumulative :
a) une jambe de suspension (16) centrale, qui soutient les moyens d'engagement (11-14 ; 17, 18) uniformément contre le cadre ;
b) pour chaque bielle oscillante (3), un élément élastique (21-23 ; 21-25) hydrostatique, soutenu par rapport au cadre (1), ces éléments élastiques de préférence étant reliés entre eux de façon hydraulique, et, le cas échéant, présentant un accumulateur de pression (26) hydrostatique commun ;
c) pour chaque bielle oscillante (3), une jambe de suspension (10) soutenue contre une poutre de balancier (9) commune, montée pivotante sur le cadre (1) ;
d) chaque fois au moins un ressort entre les éléments d'appui (52) et la bielle oscillante (3) ;
e) chaque fois une barre de torsion à effet élastique entre chaque bielle oscillante (3) et le cadre (1) ou l'élément d'engagement (4) associé à cette bielle oscillante ;
à chaque bielle oscillante et, en particulier, à chaque élément élastique étant associé de préférence au moins un élément amortisseur (par exemple 25) - en particulier un amortisseur à fonctionnement hydraulique.

6. Véhicule selon l'une des revendications précédentes, caractérisé en ce que chacune des deux bielles oscillantes (3) est reliée à au moins une barre de traction/compression (8) qui agit à l'autre extrémité sur une poutre de balancier (9) qui est montée pivotante sur le cadre (1), le cas échéant, la poutre de balancier (9) étant susceptible d'être bloquée par rapport au cadre (1), en son point de tourillonnement.

7. Véhicule selon l'une des revendications précédentes, caractérisé en ce qu'une liaison entre le cadre (1) et la bielle oscillante (3) ou la liaison entre la bielle oscillante (3) et l'élément d'engagement (4) est réalisée sous la forme de ressort de torsion.

8. Véhicule selon l'une des revendications précédentes, caractérisé en ce que les moyens d'engagement (11-14 ; 17, 18a ; 17, 18b ; 27, 29 ; 28, 30, 31 ; 32-34 ; 42-45) et/ou le servomoteur (31, 44) sont susceptibles d'être commandés - de préférence à volonté et/ou automatiquement - en fonction d'états de roulage du véhicule, pouvant être appréhendés par des capteurs (37 ; 38), en particulier comme états de roulage, pouvant être déterminées en particulier la vitesse et/ou la position en virage - de préférence par l'intermédiaire de capteurs de vitesse (37), d'inclinaison ou de force centrifuge (38) - et où, le cas échéant, est prévu un dispositif de signalisation (58), qui signale au conducteur les états de roulage et/ou la position des servomoteurs et/ou la position des moyens d'engagement.

9. Véhicule selon l'une des revendications précédentes, caractérisé en ce que le servomoteur (31 ; 46) comprend un moteur électrique avec une transmission, par exemple une transmission de type cyclo ou harmonique, qui comprend en outre un blocage de couple (45), qui bloque les couples se produisant du côté mené, dans les deux sens, et ainsi établit une liaison entre les deux éléments d'engagement (4), en transmettant cependant les couples appliqués côté entraînement au côté mené, respectivement aux éléments d'engagement (4).

10. Procédé de fonctionnement d'un véhicule selon l'une des revendications précédentes, caractérisé en ce que, en fonction de la vitesse de roulage, les deux bielles oscillantes (3) agissant parallèlement sont verrouillées ou déverrouillées l'une par rapport à l'autre, et/ou en ce que les bielles oscillantes (3), sous la commande venant d'un ordre émanant du conducteur ou d'un capteur (37, 38), sont placées l'une par rapport à l'autre dans une position déterminée, par l'intermédiaire de leurs éléments d'engagement (4), à l'aide de moyens d'engagement (11-14 ; 17, 18a ; 17, 18b ; 27, 29 ; 28, 30, 31 ; 32-34 ; 42-45) et d'un servomoteur (31, 44), les bielles oscillantes étant maintenues l'une par rapport à l'autre à l'état rigidement, respectivement de façon non élastique, lorsqu'elles sont à l'état engagé.
